# EUROPEAN PATENT SPECIFICATION

(11) **EP 3 343 004 B1**
(45) Date of publication and mention of the grant of the patent: **12.06.2024**
(21) Application number: 17211095.9
(22) Date of filing: 29.12.2017
(51) Int. Cl.: F02D 29/06, F02D 31/00, F02D 37/02, F02D 41/00, F02D 41/10, F02D 41/14, F02D 41/34, F02D 43/00, F02D 43/04, F02D 41/24

(54) **METHOD OF CONTROLLING ENGINE AND ENGINE GENERATION SYSTEM USING THE SAME**
VERFAHREN ZUR STEUERUNG EINES MOTORS UND MOTORERZEUGUNGSSYSTEM DAMIT
PROCÉDÉ DE COMMANDE DE MOTEUR ET SYSTÈME DE GÉNÉRATION DE MOTEUR L'UTILISANT

(30) Priority: 03.01.2017 KR 20170000912; 03.01.2017 KR 20170000913
(43) Date of publication of application: 04.07.2018
(73) Proprietor: LG Electronics Inc., Yeongdeungpo-gu Seoul, 07336 (KR)
(72) Inventor: JANG, Heejoong, 08592 Seoul (KR)
(74) Representative: Vossius & Partner Patentanwälte Rechtsanwälte mbB

(56) References cited:
- DE-A1- 10 319 289
- US-A- 5 894 828
- US-A1- 2011 180 043
- US-A1- 2016 126 874
- T. HSIA: "Comparisons of adaptive sampling control laws", IEEE TRANSACTIONS ON AUTOMATIC CONTROL., vol. 17, no. 6, 1 December 1972 (1972-12-01), pages 830-831, XP055476163, US ISSN: 0018-9286, DOI: 10.1109/TAC.1972.1100168

## Description

### BACKGROUND OF THE INVENTION

### Field of the Invention

The present invention relates to an engine generation system, and more particularly, to a method of controlling an engine by changing an air-fuel ratio during power generation and an engine generation system using the same.

### Discussion of the Related Art

A cogeneration system is a system that produces electric power using a generator by operating an engine that uses gas fuel, produces hot water using heat generated by the engine, and supplies the electric power or the hot water to equipment consuming the same.

This cogeneration system is connected with an air-conditioning system so as to supply electric power, heat or hot water to the same.

The engine serves to rotate the generator so that the generator produces electric power. The electric power produced by the generator is converted into commercial power by a power conversion system, which changes the current, voltage and frequency of the power produced by the generator, and the commercial power is supplied to power consumers, such as buildings, air-conditioning systems, etc.

The engine is generally driven in a normal driving mode (an air-fuel ratio of 1.0; a theoretical air-fuel ratio). However, when the engine enters a lean air-fuel ratio driving region, sudden variation in the number of revolutions per minute (RPM) of the engine may occur.

Further, when the engine enters a lean air-fuel ratio driving mode due to lean-burn control, the torque of the engine may become insufficient, the RPM of the engine may sharply decrease in accordance with a load, and consequently power shock may occur.

In addition, sudden variation in the load may cause vibration of the engine, the reliability of parts (pipes, etc.) around the engine may be deteriorated, and the parts may be damaged by the accumulation of fatigue attributable to vibration.

Therefore, there is a need for a new method of efficiently controlling the engine by driving the engine under different operating conditions in the situation in which the RPM of the engine varies due to variation in a load and other reasons and in which the RPM of the engine is stable.
US 2016/126874 A1 refers to a method of operating an internal combustion engine, wherein a fuel-air mixture is burnt in the internal combustion engine and the internal combustion engine drives a generator, wherein the generator is connected to a power supply network and delivers power to the power supply network and wherein upon or after detection of a dynamic network fault by which the power delivery of the generator into the power supply network is reduced acceleration of the internal combustion engine is prevented or limited, wherein upon or after the detection of the network fault in the power supply network the fuel feed to the internal combustion engine is increased. US 5 894 828 A refers to an idle speed control system for a direct injection spark ignition engine controlled to operate in either homogeneous air/fuel modes or stratified air/fuel modes. T. Hsia "Comparisons of adaptive sampling control laws" IEE Transactions on automatic control (1.12.1972) refers to a comparision and an examination of three adaptive sampling control laws.

### SUMMARY OF THE INVENTION

Accordingly, the present invention is directed to a method of controlling an engine and an engine generation system using the same that substantially obviate one or more problems due to limitations and disadvantages of the related art.

An object of the present invention is to provide a method of controlling an engine, which is capable of efficiently switching, depending on variation in a load, a lean air-fuel ratio control mode for improving the efficiency of the engine and a theoretical air-fuel ratio control mode for efficiently coping with the load to each other, and an engine generation system using the same.

Another object of the present invention is to provide a method of controlling an engine, which is capable of stably changing the engine driving mode between a lean air-fuel ratio control mode and a theoretical air-fuel ratio control mode when engine control conditions are changed, and an engine generation system using the same.

Additional advantages, objects, and features of the invention will be set forth in part in the description which follows and in part will become apparent to those having ordinary skill in the art upon examination of the following or may be learned from practice of the invention. The objectives and other advantages of the invention may be realized and attained by the structure particularly pointed out in the written description and claims hereof as well as the appended drawings.

The invention is defined by the independent claims. Dependent claims refer to preferred embodiments. To achieve the object and other advantages and in accordance with the purpose of the invention, as embodied and broadly described herein, a method of controlling an engine of an engine generation system includes controlling an engine under a condition of theoretical air-fuel ratio driving, performing engine revolution-per-minute (RPM) tracking control so that the engine is driven at a target engine RPM when an external load connected to a generator is changed, determining whether an engine RPM has been stabilized by determining (S41) whether the engine RPM varies within an RPM range and determining (S42) whether the external load is additionally changed; changing an air-fuel ratio to a lean air-fuel ratio upon determining that the engine RPM has been stabilized, and controlling the engine under a condition of lean air-fuel ratio driving; and controlling a control cycle of an electronic throttle control, ETC, valve, such that the control cycle is lengthened or shortened depending on the range of variation in the RPM of the engine, when the engine enters the lean air-fuel ratio driving.

The controlling the engine under the condition of the lean air-fuel ratio driving may be performed after variation in the external load is completed.

The determining whether the engine RPM has been stabilized may include determining whether the engine RPM varies, and determining whether the external load additionally varies.

The changing the air-fuel ratio may include changing driving conditions, including the engine RPM, an opening degree of a fuel valve, and an ignition angle, in stages until a target RPM and a target amount of fuel in accordance with the lean air-fuel ratio driving are satisfied.

The driving conditions may be changed toward target values in stages using a fuel suction pressure table in accordance with the lean air-fuel ratio driving and a fuel suction pressure table in accordance with the theoretical air-fuel ratio driving.

A target value of the ignition angle may be half a minimum spark advance for best torque (MBT).

The method may further include determining whether the condition of the lean air-fuel ratio driving varies, changing the air-fuel ratio to a theoretical air-fuel ratio upon determining that the condition of the lean air-fuel ratio driving varies, and controlling the engine under the condition of the theoretical air-fuel ratio driving.

The determining whether the condition of the lean air-fuel ratio driving varies may include determining whether the engine RPM varies, and determining whether the external load additionally varies.

The condition of the lean air-fuel ratio driving may vary due to additional variation in the external load.

The changing the air-fuel ratio to the theoretical air-fuel ratio may be performed before the additional variation in the external load is completed.

The method further includes, when the engine stably enters the lean air-fuel ratio driving, controlling a control cycle of electronic throttle control (ETC) valve in hunting of the engine RPM.

The control cycle of the ETC may be lengthened as a current engine RPM approaches a target engine RPM.

In another aspect of the present invention, an engine generation system includes a generator, an engine connected to a driving shaft of the generator to drive the generator, and a controller for controlling the engine, wherein the controller controls an engine under a condition of theoretical air-fuel ratio driving, performs engine revolution-per-minute (RPM) tracking control so that the engine is driven at a target engine RPM when an external load connected to the generator is changed, determines whether an engine RPM has been stabilized by determining whether the engine RPM varies within an RPM range and determining whether the external load is additionally changed, to change an air-fuel ratio to a lean air-fuel ratio, and controls the engine under a condition of lean air-fuel ratio driving, wherein the controller is configured to control a control cycle of an ETC valve such that the control cycle is lengthened or shortened depending on the range of variation in the RPM of the engine, when the engine enters the lean air-fuel ratio driving.

The controller may determine whether the condition of the lean air-fuel ratio driving varies, may change the air-fuel ratio to a theoretical air-fuel ratio upon determining that the condition of the lean air-fuel ratio driving varies, and may control the engine under the condition of the theoretical air-fuel ratio driving.

When the air-fuel ratio is changed, the controller may change driving conditions, including the engine RPM, an opening degree of a fuel valve, and an ignition angle, in stages until a target RPM and a target amount of fuel in accordance with the lean air-fuel ratio driving are satisfied.

It is to be understood that both the foregoing general description and the following detailed description of the present invention are exemplary and explanatory and are intended to provide further explanation of the invention as claimed.

### BRIEF DESCRIPTION OF THE DRAWINGS

The accompanying drawings, which are included to provide a further understanding of the invention and are incorporated in and constitute a part of this application, illustrate embodiment(s) of the invention and together with the description serve to explain the principle of the invention. In the drawings:
FIG. 1 is a conceptual view schematically illustrating an exemplary cogeneration system, to which the present invention is applicable;

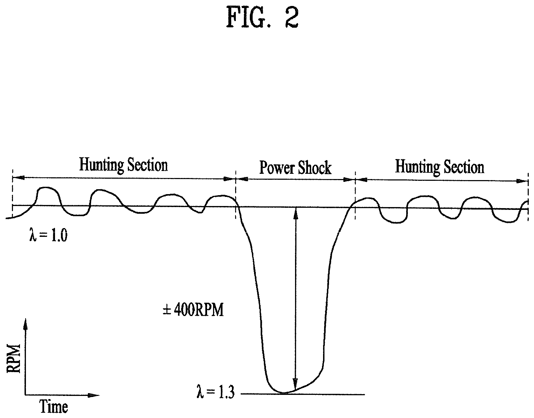

FIG. 2 is a graph showing the number of revolutions per minute (RPM) of an engine when the engine enters a lean air-fuel ratio driving region;
FIG. 3 is a graph showing engine RPM tracking control in an engine generation system;
FIG. 4 is a graph showing a method of controlling the engine of the engine generation system according to an embodiment of the present invention;
FIG. 5 is a flowchart showing the method of controlling the engine of the engine generation system according to the embodiment of the present invention;
FIG. 6 is a graph showing a method of controlling the engine of the engine generation system according to another embodiment of the present invention;
FIG. 7 is a flowchart showing the method of controlling the engine of the engine generation system according to the other embodiment of the present invention;
FIG. 8 is a table schematically showing an air-fuel ratio change process according to the embodiment of the present invention;
FIG. 9 is a flowchart showing a method of controlling the engine of the engine generation system according to a further embodiment of the present invention;
FIG. 10 is a diagram schematically showing a process of changing driving conditions in stages according to the further embodiment of the present invention;
FIG. 11 is a graph showing nitrogen oxide emissions when an ignition angle is ½ of a minimum spark advance for best torque (MBT);
FIG. 12 is a graph showing a manifold absolute pressure in accordance with each air-fuel ratio;
FIG. 13 is a graph showing reduction of nitrogen oxide emissions according to the further embodiment of the present invention; and
FIG. 14 is a block diagram schematically showing essential parts of the engine generation system to which the present invention is applicable.

### DETAILED DESCRIPTION OF THE INVENTION

Reference will now be made in detail to the preferred embodiments of the present invention, examples of which are illustrated in the accompanying drawings. Wherever possible, the same reference numbers will be used throughout the drawings to refer to the same or like parts.

Exemplary embodiments of the present invention will be described in detail. However, the present invention is not restricted to the embodiments, and includes variations, equivalents, and substitutions of technical configurations of the invention disclosed in the appended claims.

It will also be understood that when an element such as a layer, a region, or a substrate is referred to as being "on" another element, it can be directly on the other element, or intervening elements may also be present.

It will be understood that, although the terms "first", "second", etc., may be used herein to describe various elements, components, regions, layers and/or sections, these elements, components, regions, layers and/or sections should not be construed as being limited by these terms.

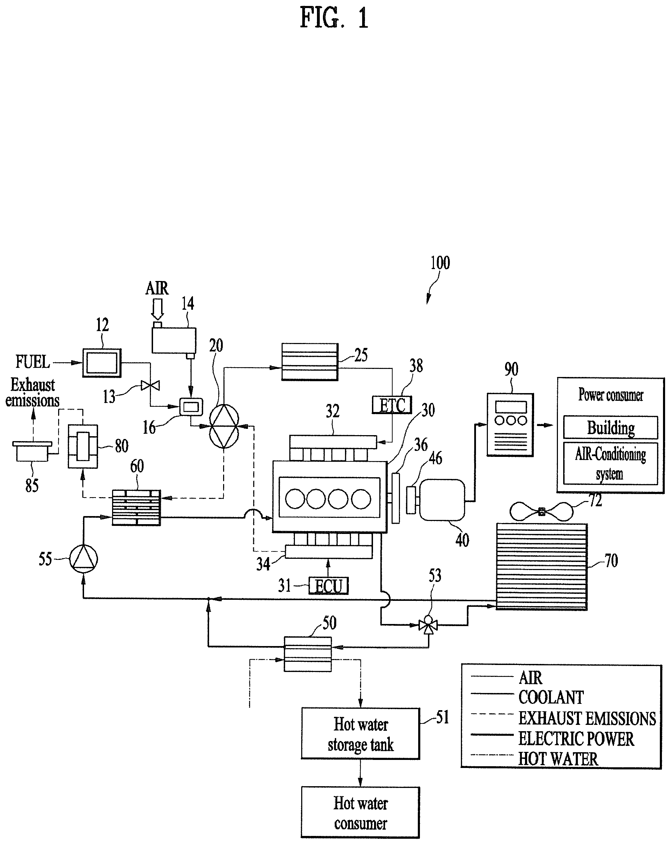

FIG. 1 is a conceptual view schematically illustrating an exemplary cogeneration system, to which the present invention is applicable.

A cogeneration system 100 is a system that produces electric power using a generator by operating an engine that uses gas fuel, produces hot water using heat generated by the engine, and supplies the electric power or the hot water to consumers.

This cogeneration system 100 may be connected with an air-conditioning system so as to supply electric power, heat or hot water to the same.

The gas fuel may be supplied while an outlet pressure thereof is maintained constant all of the time by a zero governor 12, regardless of the configuration of an inlet port or a change in flow rate. The zero governor 12 serves to enable the engine to maintain a stable outlet pressure over a wide range, and also serves to maintain the pressure of the gas fuel, which is supplied to the engine, substantially constant so as to be equivalent to atmospheric pressure. The zero governor 12 may include two solenoid valves to cut off the supply of the fuel.

Air may be filtered and converted into clean air by an air cleaner 14 and may then be supplied. The air cleaner 14 serves to filter the external air, which is to be supplied to the engine, using a filter in order to prevent the introduction of dust, water mist, and oil mist.

The gas fuel and the air, which are supplied in the above-described way, may be mixed and converted into a fuel-air mixture, the fuel-to-air ratio of which is constant, by a mixer 16, and the fuel-air mixture may be sucked into the engine.

A fuel valve 13 is provided at the inlet of the mixer 16 in order to control the supplied amount of gas fuel, which is to be mixed with air. The larger the supplied amount of gas fuel, the higher the fuel-to-air ratio of the fuel-air mixture.

A turbocharger 20 may compress the fuel-air mixture to a high-temperature and high-pressure state. The turbocharger 20 is a device that rotates a turbine using the force of exhaust emissions, compresses the sucked air using the rotational force, and supplies the compressed air to the cylinder of the engine, thereby increasing the output thereof.

The term "turbocharger" is a portmanteau word of the term "turbine" and the term "supercharger". The turbocharger 20 includes a turbine and an air compressor, which is directly connected to the turbine. This turbocharger 20 rotates the turbine wheel using the energy of exhaust emissions, compresses the sucked air using the air compressor, and supplies the compressed air to the cylinder.

The turbocharger 20 is configured such that the turbine wheel having blades and the impeller of the air compressor are connected to a single shaft and are enveloped by respective housings. The turbocharger 20 may be disposed near the exhaust manifold of the engine.

The fuel-air mixture is compressed by the turbocharger 20 and the temperature thereof increases. Therefore, the compressed fuel-air mixture is cooled by an intercooler 25, and is then supplied to the engine 30 via an intake manifold 32. The intercooler 25 serves to increase the density of the fuel-air mixture by cooling the same, thereby increasing the absolute amount of the fuel-air mixture that is introduced into the engine and consequently improving the engine output.

The intercooler 25 may include an air-cooling-type heat-exchange path for cooling the fuel-air mixture using air or a water-cooling-type heat-exchange path for cooling the fuel-air mixture using water. The water-cooling-type intercooler may use coolant as a medium, and may include a separate heat exchanger and a separate pump in order to dissipate heat obtained from the compressed fuel-air mixture to the outside.

A throttle valve 38 may be provided between the intercooler 25 and the intake manifold 32 in order to control the amount of fuel-air mixture that is introduced into the engine 30. An electronic throttle control valve (ETC valve) may be used as the throttle valve.

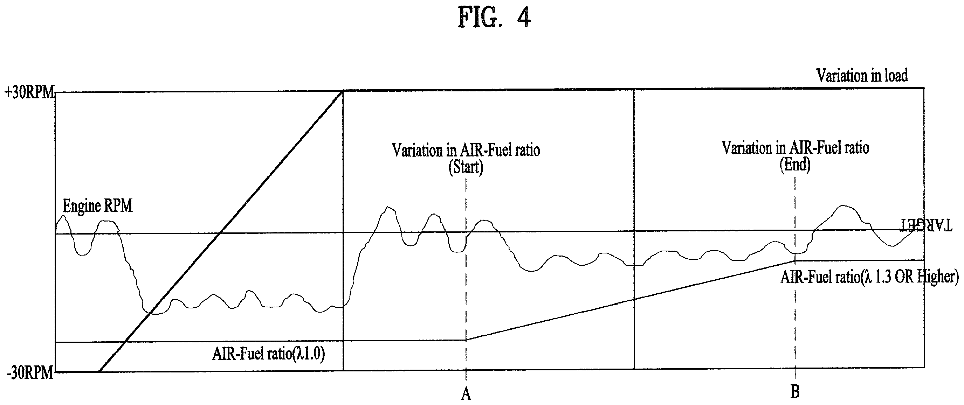

In addition, an engine control unit (ECU) 31 may be provided in order to control various control parameters related to control of the engine. For example, the ETC valve 38 and the control cycle of the ETC valve 38 may be controlled by the ECU 31. This ECU 31 may be controlled by a main controller (refer to FIG. 4), which controls the overall operation of the engine generation system.

The engine 30 may be an internal combustion engine that is operated on a 4-stroke cycle, including intake, compression, combustion, and exhaust strokes, using the fuel-air mixture introduced thereinto via the intake manifold 32.

Exhaust emissions generated by the operation of the engine 30 may be discharged through the exhaust manifold 34 and, at the same time, may rotate the impeller of the turbocharger 20.

The engine 30 rotates the generator 40 so that the generator 40 produces electric power. To this end, a pulley 36 provided at an end of the rotary shaft of the engine 30 and a pulley 46 provided at an end of the rotary shaft of the generator 40 may be connected to each other via a belt.

A ratio of the number of revolutions per minute of the pulley 36 of the engine 30 to the number of revolutions per minute of the pulley 46 of the generator 40 may be set to be about 1:3. That is, while the rotary shaft of the engine 30 rotates once, the rotary shaft of the generator 40 may rotate about three times.

The electric power produced by the generator 40 may be converted into commercial power by a power conversion system 90, which changes the current, voltage and frequency of the power produced by the generator, and the commercial power may be supplied to power consumers, such as buildings, air-conditioning systems, etc.

Because the engine 30 is operated by combustion of gas, a great amount of heat is generated. Therefore, configuration is made such that coolant is circulated to absorb the high-temperature heat generated by the engine through heat exchange.

In a vehicle, a radiator is mounted in a coolant circulation passage, whereby all of the waste heat from the engine is discarded. However, in the cogeneration system 100, heat from the engine may be absorbed into the coolant and may be used to produce hot water.

To this end, a hot water heat exchanger 50 is provided in the coolant circulation passage so that the coolant exchanges heat with water, which is supplied separately from the coolant, and consequently the water receives heat from the high-temperature coolant.

The hot water, which is generated by the hot water heat exchanger 50, may be stored in a hot water storage tank 51, and the hot water stored in the hot water storage tank 51 may be supplied to hot water consumers, such as buildings, etc.

When the hot water consumers do not use the hot water, water is not supplied to the hot water heat exchanger 50, which may cause an increase in the temperature of the coolant. To prevent this problem, a separate radiator 70 may be mounted in order to dissipate unnecessary heat from the coolant to the outside.

The radiator 70 dissipates heat in a manner such that the high-temperature coolant exchanges heat with air through a plurality of fins. A heat-dissipating fan 72 may be provided in order to promote the heat dissipation.

A flow passage of the coolant flowing out of the engine 30 may be bifurcated into a flow passage connected to the hot water heat exchanger 50 and a flow passage connected to the radiator 70, and a three-way valve 53 may be mounted at the bifurcation point in order to control the direction in which the coolant flows in accordance with the circumstances. The three-way valve 53 may allow the coolant to be supplied only to the hot water heat exchanger 50 or only to the radiator 70, or may distribute the coolant to the hot water heat exchanger 50 and the radiator 70 in a certain proportion as needed.

The coolant, which has sequentially passed through the three-way valve 53 and the radiator 70 and from which heat has been dissipated by the radiator 70, and the coolant, which has sequentially passed through the three-way valve 53 and the hot water heat exchanger 50, may meet and may then be introduced into the engine 30.

In addition, a coolant pump 55 may be mounted in the coolant circulation passage in order to control the flow speed of the coolant. The coolant pump 55 may be mounted at a position in the coolant circulation passage between a point downstream of the hot water heat exchanger 50 and the radiator 70 and a point upstream of the engine 30.

The exhaust emissions discharged through the exhaust manifold 34 of the engine 30 may be used to operate the above-described turbocharger 20. An exhaust emission heat exchanger 60 may be provided in order to recover waste heat from the exhaust emissions.

The exhaust emission heat exchanger 60 may be mounted at a position in the coolant circulation passage between a point downstream of the coolant pump 55 and a point upstream of the engine 30. The exhaust emission heat exchanger 60 may be configured such that the exhaust emissions discharged through the turbocharger 20 and the coolant exchange heat with each other. The waste heat from the exhaust emissions may be recovered through the exhaust emission heat exchanger 60.

While passing through the exhaust emission heat exchanger 60, the coolant may be heated to a certain extent, i.e. to a warm state, and may then be introduced into the engine 30. In this case, the coolant may also cool the engine 30 sufficiently.

The exhaust emissions, which have passed through the exhaust emission heat exchanger 60 and from which heat has been dissipated, may pass through a muffler 80. The muffler 80 serves to reduce engine exhaust noise.

The exhaust emissions, which have passed through the muffler 80, may pass through a drain filter 85 and may then be discharged outside. The drain filter 85 may be filled with a purification stone in order to purify condensed water generated in the muffler 80 and an exhaust emission line, thereby purifying and neutralizing acidic condensed water and subsequently discharging the same to the outside.

Even when the engine is stably driven in a theoretical air-fuel ratio (λ = 1.0) driving mode, the engine is not always driven at a constant number of revolutions per minute (RPM) due to incomplete combustion or the like, and thus hunting of the engine RPM may occur.

Further, when the engine enters a lean air-fuel ratio (e.g. λ = 1.3) driving mode due to lean-burn control, the torque of the engine may become insufficient, the RPM of the engine may sharply decrease (about ± 400 RPM) in accordance with a load, and consequently power shock may occur.

When the RPM of the engine sharply decreases, the RPM of the engine may be recovered by tracking a target RPM using a controller. However, in some cases, the RPM of the engine may not be recovered, and the engine may stall.

In addition, sudden variation in the load may cause vibration of the engine, the reliability of parts (pipes, etc.) around the engine may be deteriorated, and the parts may be damaged by the accumulation of fatigue attributable to vibration.

In a cogeneration system, to which the present invention is applicable, the allowable range of variation in the RPM of the engine is set to be ± 2%. However, it may be difficult to satisfy the set allowable range of variation when coping with a shortage of engine torque.

As described above, the engine may not always be driven at a constant RPM, and may not be driven at a target RPM in accordance with variation in the load such as the generator. In order to prevent this problem, control for driving the engine at a target RPM may be performed, and this control is referred to as engine RPM tracking control.

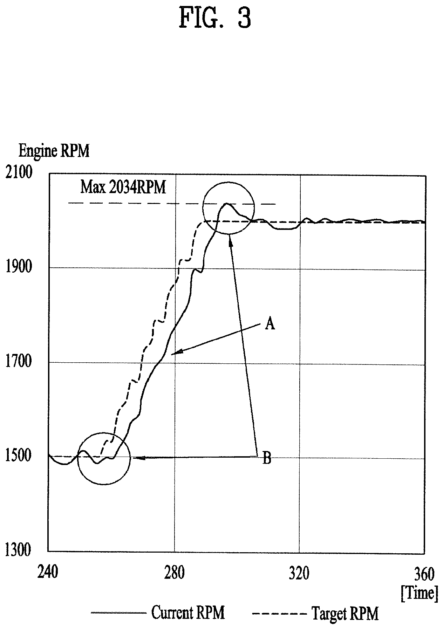

FIG. 3 is a graph showing the engine RPM tracking control in the engine generation system.

Referring to FIG. 3, the tracking control is performed such that the RPM of the engine tracks a target RPM indicated by the dotted line. During tracking control, power shock may occur when the RPM is first varied in order to start tracking the target RPM and when variation in the RPM is completed.

In particular, when variation in the RPM commences in order to track the target RPM, "under shooting", in which the actual RPM falls under the target RPM, may occur. When variation in the RPM is completed, "over shooting", in which the actual RPM rises over the target RPM, may occur.

These power shock regions A may be affected by control of the opening degree of a fuel valve of the engine and control of an ignition angle. A region B in which the target RPM rises may be affected by the RPM of the engine and a control cycle of electronic throttle control (ETC).

In order to reduce or prevent such under shooting and over shooting of the RPM of the engine, in the present invention, variation in the RPM of the engine, an ignition angle, the amount of fuel, ignition timing, and an ETC cycle may be controlled in stages, thereby stably driving the engine when the control conditions of the engine are changed.

According to the present invention, the range of variation in the RPM of the engine may be kept within 50 RPM by minimizing variation in the RPM of the engine with respect to the shortage of the torque of the engine. Therefore, the engine RPM tracking performance may be enhanced, the stability of engine control may be improved, vibration may be reduced, and the reliability of peripheral parts may be enhanced.

The present invention is capable of satisfying Japanese standards, in which the allowable range of variation in the RPM of the engine is ± 2% in relation to hunting of the engine RPM.

In addition, the amount of exhaust emissions may be reduced by lean-burn control.

Hereinafter, a concrete process of performing the aforementioned control will be described with reference to the drawings.

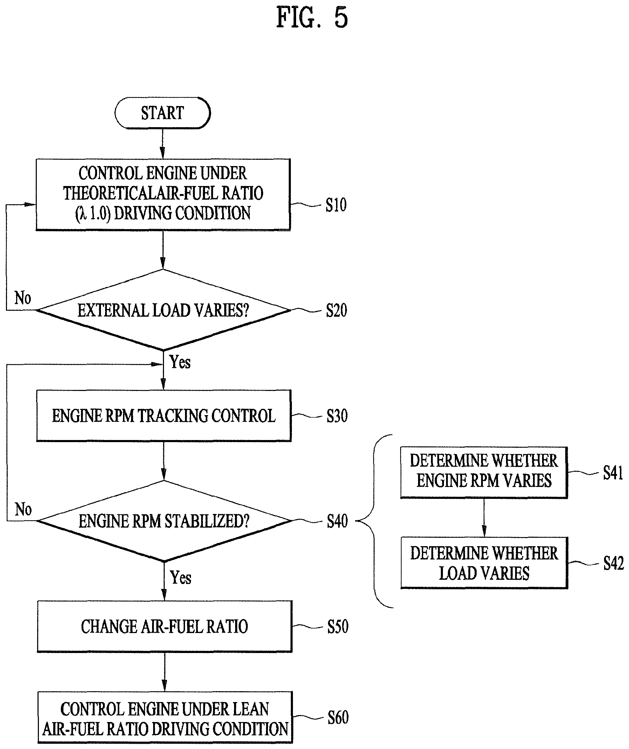

FIG. 4 is a graph showing a method of controlling the engine of the engine generation system according to an embodiment of the present invention, and FIG. 5 is a flowchart showing the method of controlling the engine of the engine generation system according to the embodiment of the present invention.

When the engine generation system is driven, when the engine is initially started, or when the engine is in an idle state, the engine is controlled to be driven in a theoretical air-fuel ratio (λ = 1.0) driving mode in order to stabilize the state of the engine.

In addition, the engine is controlled to be driven in a theoretical air-fuel ratio (λ = 1.0) driving mode in consideration of tracking toward a load and the state of the engine in accordance with variation in the load.

Subsequently, when variation in the load is completed and the RPM of the engine is maintained constant, air-fuel ratio variable control is performed in order to switch the engine driving mode from the theoretical air-fuel ratio (λ = 1.0) driving mode to a lean air-fuel ratio (λ = 1.3 or higher) driving mode.

Referring to FIG. 4, the RPM of the engine varies in accordance with variation in the load. That is, when the load increases, the RPM of the engine falls below the target value. In this case, in order to stabilize the state of the engine, the engine is controlled under the theoretical air-fuel ratio (λ = 1.0) driving condition.

Thereafter, when variation in the load is completed and the RPM of the engine is stabilized, the air-fuel ratio is changed so that fuel consumption and exhaust emissions are reduced, whereby the engine is efficiently controlled.

In this process, the amount of fuel, the ignition angle, and the ETC valve are controlled in stages so that the air-fuel ratio is stably changed, whereby hunting of the engine RPM does not occur, and the air-fuel ratio is stably changed.

As described above, the amount of fuel may be controlled by the fuel valve 13, and the ignition angle and the ETC valve 38 may be controlled by the ECU 31. The ignition angle may be adjusted by controlling combustion timing of an ignition plug, which is mounted in the engine, using the ECU 31.

As such, when the engine enters a target lean air-fuel ratio region, the engine may be controlled in order to accomplish economical fuel consumption.

A detailed description of the above process will be made with reference to FIG. 5.

First, when the engine is initially started, when the engine is in an idle state, or when the RPM of the engine is not stable, for example, due to variation in the load, the engine is controlled under the theoretical air-fuel ratio (λ = 1.0) driving condition (S10).

When the external load that is connected to the generator varies (S20), engine RPM tracking control is performed so that the engine is driven at a target engine RPM (S30).

That is, the process of determining whether the external load has varied (S20) may be performed periodically. When it is determined that the external load has varied, engine RPM tracking control is performed (S30).

The case in which the load varies may be, for example, the case in which the electric power produced by the engine generation system is consumed, and more particularly, may be the case in which the electric power that is produced by the engine generation system after the starting thereof is supplied to power consumers. One example of a power consumer, to which electric power is supplied from the engine generation system, may be an air-conditioning system.

The engine may not always be driven at a constant RPM due to the aforementioned various circumstances. In some cases, the engine may not be driven at a target RPM due to variation in the load such as the generator. In order to prevent this problem, control for driving the engine at a target RPM may be performed, and this control is referred to as engine RPM tracking control.

Engine RPM tracking control may be performed in the entire section in which the engine is driven to produce electric power.

When variation in the load is completed, it is determined whether the RPM of the engine has been stabilized (S40).

The step S40 of determining whether the RPM of the engine has been stabilized may include a step of determining whether the RPM of the engine varies (S41) and a step of determining whether the external load additionally varies (S42).

In particular, the step S41 of determining whether the RPM of the engine varies may include a step of determining whether the range of variation in the RPM of the engine is within 20 RPM. Typically, even when the engine is in a stable state, the RPM of the engine may vary within a range of 15 RPM depending on the state of the ETC, the density of the fuel-air mixture, the pressure distribution in the cylinder, etc. Therefore, if the range of variation in the RPM of the engine is within 20 RPM (which is slightly larger than 15 RPM), it can be recognized that the RPM of the engine is stable.

Further, it may be additionally determined whether variation in the load due to variation in the RPM of the engine is, on the basis of a manifold absolute pressure (MAP), within the range of 10 MAP.

Furthermore, it may be additionally determined whether the RPM of the engine and the load are maintained in a stable state for a predetermined time period or more.

Based on the determination results of the above conditions, whether the engine is in a sufficiently stable state may be finally determined.

When the RPM of the engine is stabilized, the air-fuel ratio is changed to a lean air-fuel ratio state (S50), and the engine is controlled under the lean air-fuel ratio driving condition (S60).

In the step S50 of changing the air-fuel ratio, the air-fuel ratio may be changed to a target value in stages using a fuel suction pressure table in accordance with the lean air-fuel ratio driving and a fuel suction pressure table in accordance with the theoretical air-fuel ratio driving.

At this time, this driving condition may be changed at a regular time interval (e.g. 2 seconds) between a set value in the fuel suction pressure table in accordance with the lean air-fuel ratio driving and a set value in the fuel suction pressure table in accordance with the theoretical air-fuel ratio driving.

The step S50 of changing the air-fuel ratio may be performed such that the driving conditions, including the RPM of the engine, the opening degree of the fuel valve, and the ignition angle, are changed in stages until a target RPM and a target amount of fuel in accordance with the lean air-fuel ratio driving are satisfied.

In particular, the step of changing the driving conditions in stages may be repeatedly performed until the current RPM of the engine reaches a target RPM and the current step of the opening degree of the fuel valve reaches a target step.

The step S60 of controlling the engine under the lean air-fuel ratio driving condition may be performed such that an optimum value is derived in accordance with the corresponding circumstances on the basis of data in a table in which operating points of the engine and optimum operating points for set loads are mapped.

The step S60 of controlling the engine under the lean air-fuel ratio driving condition may be performed after variation in the external load is completed.

When the load increases, the RPM of the engine falls below a target value. However, the RPM of the engine may be controlled by the above-described engine RPM tracking control S30, so that the range of variation in the RPM of the engine does not exceed a predetermined level.

When variation in the load is completed, the RPM of the engine is stabilized, and variation in the air-fuel ratio S80 may be started.

Referring to FIG. 4, variation in the air-fuel ratio S80 is started (A) after variation in the load is completed, and is completed (B) when the air-fuel ratio reaches a predetermined level.

The output factors of the cogeneration system largely include electric power and hot water. Because a consumer does not always consume these two factors regularly, there is a need for immediate action corresponding to consumption by the consumer. The load applied to the system varies depending on the consumed amounts of hot water and electric power.

According to the above-described embodiment, in order to cope with variation in the load, the lean air-fuel ratio control for improving the efficiency of the engine and the theoretical air-fuel ratio control for efficiently coping with the load may be efficiently switched to each other.

When the load varies, the system stably tracks the varied load through the engine RPM tracking control (variation in the RPM of the engine in accordance with a target amount of electric power, control by which the current RPM of the engine tracks a target RPM). When it is determined that there is no variation in the load and that the engine is stably driven, with the RPM fixed to a specific range, lean-burn control (lean air-fuel ratio driving control) is started in order to improve the efficiency of the engine.

Lean-burn control is lean air-fuel ratio driving control for reducing fuel consumption. Although the efficiency of tracking the load and/or the engine output may be reduced, lean-burn control is advantageous in that fuel consumption is minimized under the fixed load condition.

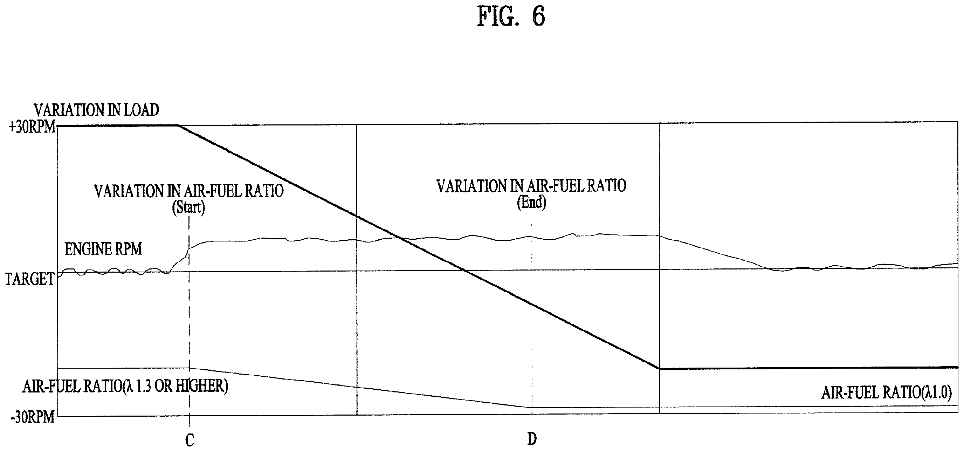

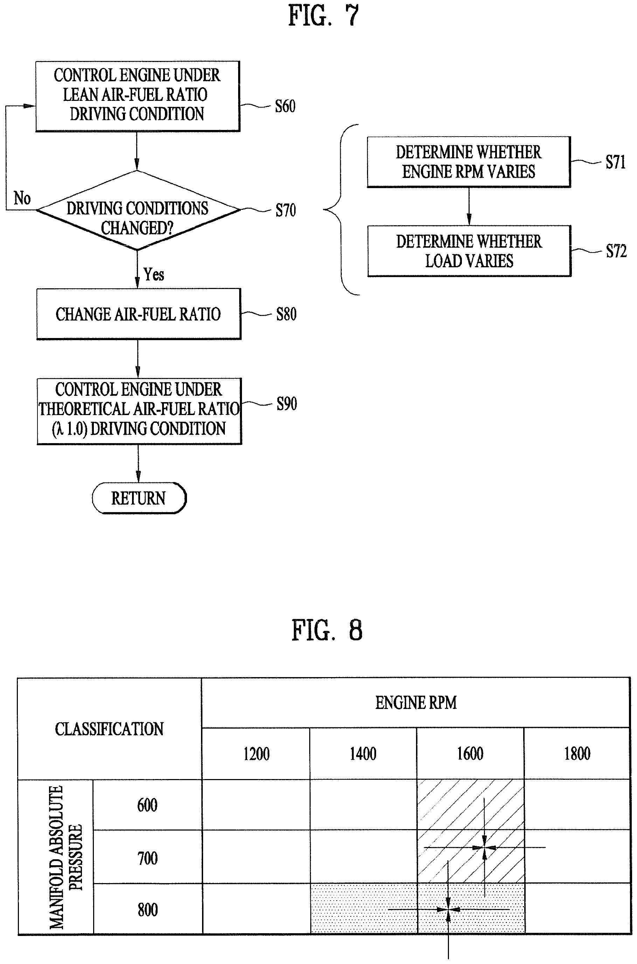

FIG. 6 is a graph showing a method of controlling the engine of the engine generation system according to another embodiment of the present invention, and FIG. 7 is a flowchart showing the method of controlling the engine of the engine generation system according to the other embodiment of the present invention.

The engine control method according to this embodiment may be a process that is performed subsequently to the above-described step S60 of controlling the engine under the lean air-fuel ratio driving condition.

In the case in which the RPM of the engine deviates from a target value due to variation in the load or the like during lean air-fuel ratio driving control (lean-burn control), theoretical air-fuel ratio driving control may be restarted in order to improve tracking toward the load and/or the output.

That is, the air-fuel ratio may be changed to perform theoretical air-fuel ratio driving control by again increasing the amount of fuel, whereby tracking toward the load is stably performed.

After the step S60 of controlling the engine under the lean air-fuel ratio driving condition, a step of determining whether the lean air-fuel ratio driving condition is changed may be performed (S70). The step S70 of determining whether the lean air-fuel ratio driving condition is changed may be continually performed.

The step S70 of determining whether the lean air-fuel ratio driving condition is changed may include a step of determining whether the RPM of the engine is changed (S71) and a step of determining whether the external load is additionally changed (S72).

As exemplarily shown in FIG. 6, the RPM of the engine may be changed by variation in the load. The RPM of the engine may also change for various other reasons.

In the cogeneration system, to which the above-described present invention is applicable, the external load may often vary due to variation in factors such as hot water and electric power. In this case, the RPM of the engine deviates from a target value, as shown in FIG. 6.

FIG. 6 shows the situation in which the load is decreased or eliminated. When the load is decreased or eliminated, the RPM of the engine rises above a target value. However, the RPM of the engine may be controlled by the above-described engine RPM tracking control S30 so that the range of variation in the RPM of the engine does not exceed a predetermined level.

Although it is exemplarily shown in FIG. 6 that the load is decreased or eliminated, this embodiment may be identically applied to the situation in which the RPM of the engine deviates from a target value due to an increase in the load.

When it is determined that the driving condition has been changed based on the result of determining variation in the RPM of the engine S71 and the result of determining variation in the load S72, the air-fuel ratio is changed to the theoretical air-fuel ratio (λ = 1.0) (S80).

Subsequently, the engine is controlled under the theoretical air-fuel ratio driving condition (S90).

Referring to FIG. 6, the step S80 of changing the air-fuel ratio to the theoretical air-fuel ratio may be performed before additional variation in the load is completed. It is effective to perform the air-fuel ratio change step S80, in which the engine is driven under the theoretical air-fuel ratio driving condition so as to efficiently cope with variation in the load, before variation in the load is completed.

Referring to FIG. 6, the air-fuel ratio change step S80 is started (C) at the same time as the start of variation in the load and is completed (D) while variation in the load is underway. Therefore, it is possible to efficiently cope with variation in the load.

FIG. 8 is a table schematically showing the air-fuel ratio change process according to the embodiment of the present invention.

As described above, in the air-fuel ratio change step S50, the air-fuel ratio may be changed to a target value in stages using the fuel suction pressure table in accordance with the lean air-fuel ratio driving and the fuel suction pressure table in accordance with the theoretical air-fuel ratio driving.

The driving conditions are controlled so as to be changed in stages between the manifold absolute pressure (MAP) table for maximum efficiency driving (theoretical air-fuel ratio driving) and the MAP table for lean air-fuel ratio driving. Therefore, even when the driving conditions are changed, it is possible to stably drive the engine.

The step S60 of controlling the engine under the lean air-fuel ratio driving condition may be performed such that an optimum value is derived in accordance with the corresponding circumstances on the basis of data in the table in which operating points of the engine and optimum operating points for set loads are mapped.

The process of deriving the mapped data may be performed based on the table in FIG. 8, which shows the relationship between the current MAP and the RPM of the engine.

The data in this table are interval data, and may not include all successive regions. Therefore, control suitable for the optimum operating point may be performed by correcting an intermediate value of the current MAP region and an intermediate value of the engine RPM region.

Referring to FIG. 8, difference between adjacent values in the table in FIG. 8 is divided equally into one hundred parts, and a value corresponding to each operating point is derived. The control is performed by applying the derived value to the current operating point.

For example, when the engine is driven under conditions of 800 MAP and 1550 RPM, the engine may be controlled by correcting the data on the horizontal axis corresponding to 800 MAP and the data on the vertical axis corresponding to 1550 RPM to percentage values.

In another example, when the engine is driven under conditions of 680 MAP and 1620 RPM, the engine may be controlled by correcting the data on the horizontal axis corresponding to 680 MAP and the data on the vertical axis corresponding to 1620 RPM to percentage values.

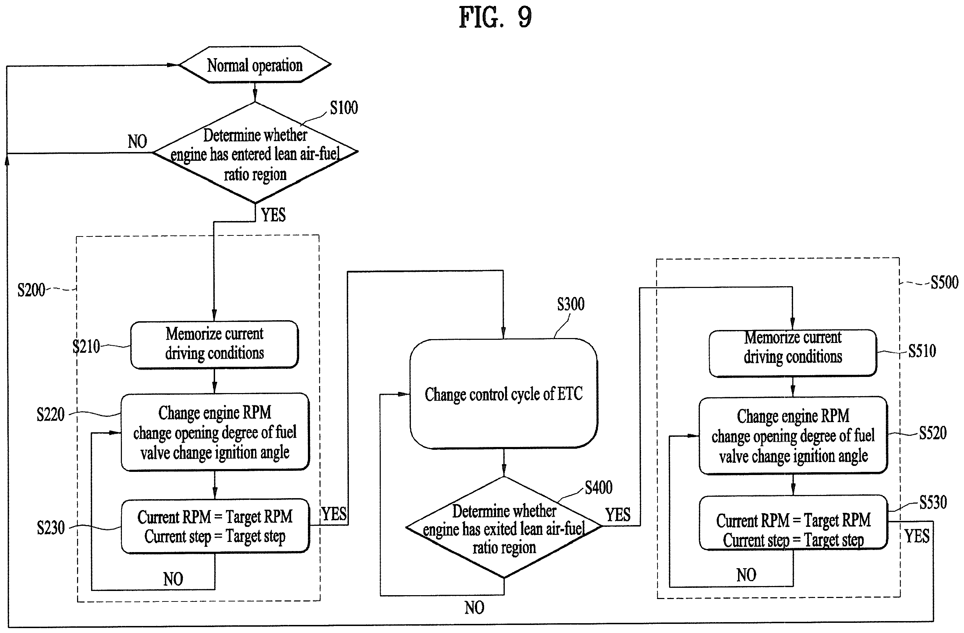

FIG. 9 is a flowchart showing a method of controlling the engine of the engine generation system according to a further embodiment of the present invention.

Referring to FIG. 9, it is determined whether the engine has entered the lean air-fuel ratio driving region during the normal driving mode, i.e. the theoretical air-fuel ratio driving mode (S100). When it is determined that the engine has entered the lean air-fuel ratio driving mode, an entering control step is started (S200).

The entering control step S200 may include a step of changing the driving conditions, including the RPM of the engine, the opening degree of the fuel valve, and the ignition angle, in stages until a target RPM and a target amount of fuel in accordance with the lean air-fuel ratio driving mode are satisfied (S220).

As described above, the amount of fuel may be controlled by the fuel valve 13, and the ignition angle and the ETC valve 38 may be controlled by the ECU 31. The ignition angle may be adjusted by controlling combustion timing of an ignition plug, which is mounted in the engine, using the ECU 31.

The step S220 of changing the driving conditions in stages may be repeatedly performed until the current RPM of the engine reaches a target RPM and the current step of the opening degree of the fuel valve reaches a target step (S230).

The method according to this embodiment may further include a step of storing (memorizing) the current driving conditions, including the current RPM of the engine, the opening degree of the fuel valve, and the ignition angle (S210), before the step S220 of changing the driving conditions in stages.

Therefore, the method is advantageous in that the driving conditions can be restored to the current driving conditions at any subsequent process.

Thereafter, when the engine has stably entered the lean air-fuel ratio driving mode, maintenance control may be started (S300).

In the maintenance control S300, the state of the engine is corrected so that the engine can continue to be stably driven even when the RPM of the engine and the load vary according to the circumstances.

The maintenance control S300 may include a step of controlling an ETC cycle during hunting of the engine RPM.

The ETC cycle may be controlled so as to be lengthened as the current RPM of the engine approaches a target RPM of the engine.

When the range of variation in the RPM of the engine is large, for example, 50 RPM, it is determined that the degree of hunting of the engine RPM is great, and the ETC cycle may be controlled so as to be shortened.

The ETC cycle may be controlled to be in the range from 700 ms to 1200 ms.

The above-described engine RPM tracking control may be performed all of the time when the cogeneration system is driven, more particularly, when the engine is driven.

When it is intended to exit the lean air-fuel ratio driving mode while the lean air-fuel ratio driving mode is being performed, it is determined whether the engine has exited the lean air-fuel ratio driving mode (S400).

When it is determined that the engine has exited the lean air-fuel ratio driving mode, exit control is performed (S500).

Similar to the entering control step S200, the exit control step S500 may include a step of changing the driving conditions, including the RPM of the engine, the opening degree of the fuel valve, and the ignition angle, in stages until a target RPM and a target amount of fuel in accordance with the theoretical air-fuel ratio driving mode are satisfied (S520).

The step S520 of changing the driving conditions in stages may be repeatedly performed until the current RPM of the engine reaches a target RPM and the current step of the opening degree of the fuel valve reaches a target step (S530).

After exiting the lean air-fuel ratio driving mode, the engine is controlled so as to be stably driven in the region of an air-fuel ratio of 1.0 (the theoretical air-fuel ratio driving region).

The method according to this embodiment may further include a step of storing (memorizing) the current driving conditions, including the current RPM of the engine, the opening degree of the fuel valve, and the ignition angle (S510), before the step S520 of changing the driving conditions in stages.

Therefore, the method is advantageous in that the driving conditions can be restored to the current driving conditions at any subsequent process.

The range of variation in the RPM of the engine may be within 50 RPM. That is, when the engine enters the lean air-fuel ratio driving mode from the theoretical air-fuel ratio driving mode and/or when the engine exits the lean air-fuel ratio driving mode to the theoretical air-fuel ratio driving mode, the range of variation in the RPM of the engine may be maintained within 50 RPM.

As described above, the theoretical air-fuel ratio may refer to a state in which λ equals to 1.0, and the lean air-fuel ratio may refer to a state in which λ equals to 1.3.

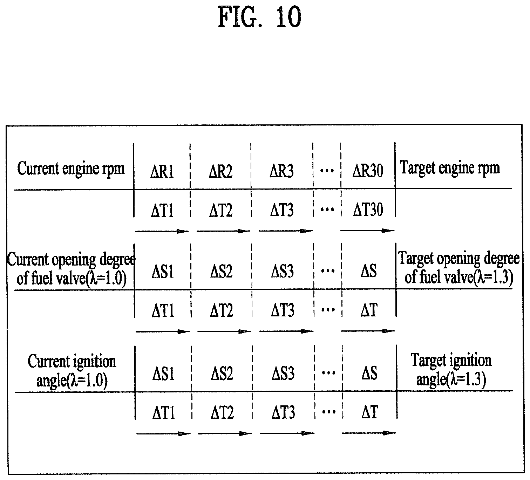

FIG. 10 is a diagram schematically showing the process of changing the driving conditions in stages according to the further embodiment of the present invention.

Referring to FIG. 10, at least one of the driving condition in the entering control step S200 or the driving condition in the exit control step S500 may be changed to a target value in stages using the fuel suction pressure table in accordance with the lean air-fuel ratio driving and the fuel suction pressure table in accordance with the theoretical air-fuel ratio driving.

At this time, this driving condition may be changed at a regular time interval (e.g. 2 seconds) between a set value in the fuel suction pressure table in accordance with the lean air-fuel ratio driving and a set value in the fuel suction pressure table in accordance with the theoretical air-fuel ratio driving.

As described above, the present invention provides a control method for preventing power shock from occurring when an excessive air ratio is suddenly changed from 1.0 (the theoretical air-fuel ratio; the maximum efficiency driving section) to 1.3 (the lean air-fuel ratio).

Lean air-fuel ratio driving may be performed in order to reduce nitrogen oxide (NOx) emissions. That is, the control method of the present invention may have the effect of reducing nitrogen oxide (NOx) emissions.

In order to prevent hunting of the engine RPM, which may occur when the load and the engine RPM vary due to the change in the driving mode, and to achieve stable control, the driving conditions are controlled so as to be changed in stages between the manifold absolute pressure (MAP) table for maximum efficiency driving (theoretical air-fuel ratio driving) and the MAP table for lean air-fuel ratio driving. Therefore, even when the driving conditions are changed, it is possible to stably drive the engine.

The above-described control method may be applied to change the current values of the opening degree of the fuel valve, the ignition timing, and the excessive air ratio in accordance with the RPM of the engine and the MAP before the entering control step S200 to the target values corresponding to the excessive air ratio of 1.3.

That is, when the entering control step S200 is performed, the proportional increase and decrease of the RPM of the engine, the opening degree of the fuel valve, the ignition angle and the ignition timing are controlled, thereby making it possible to stably enter the lean air-fuel ratio driving mode.

After entering the lean air-fuel ratio driving mode, the control process that was performed at the entering control step S200 may be continually and identically performed with respect to the RPM of the engine and the load, which may vary depending on the circumstances. Therefore, the state of the engine may be corrected so that the engine can be stably driven.

In the entering control step S200, the target value of the ignition angle may be half the minimum spark advance for best torque (MBT) (½ of the MBT).

According to the control method of the present invention, in order to stabilize the RPM of the engine when the control of the opening degree of the fuel valve and the control of the change of the ignition timing are completed, the RPM of the engine may be controlled while being sectioned into 30 steps per second ((ΔRPM/30)/1s).

In order to prevent a sudden change in the RPM of the engine, the optimum opening degree of the fuel valve may be 1 step every 2 seconds (1Step/2s) and the optimum ignition timing may be a 1-degree change every 2 seconds (1Degree/2s), which were obtained through experimentation on respective conditions.

The efficiency of the engine and the reduction of the NOx emissions when the ignition angle is ½ of the MBT are improved more than when the ignition angle is the MBT. Therefore, the optimum ignition angle may be ½ of the MBT.

The ETC cycle may be in the range from 500 ms to 1300 ms, and may be controlled so as to be changed so that the engine can be driven most stably under the respective driving conditions.

When the RPM of the engine is changed, the engine RPM tracking performance may be abruptly changed depending on the control speed of the ETC, which controls the amount of sucked air. Power shock may be minimized by taking into account variation in the RPM of the engine, the target RPM and the tracking time in accordance with the amount of fuel and the ignition angle. In addition, when the RPM of the engine is changed, the time taken to track the target RPM may also be greatly reduced.

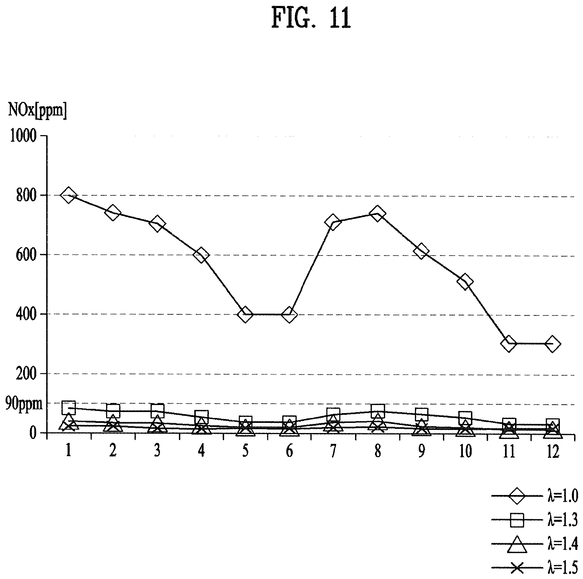

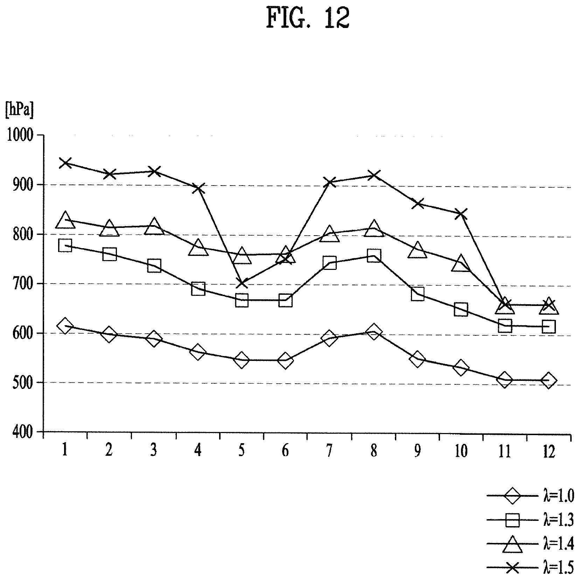

FIG. 11 is a graph showing nitrogen oxide emission when the ignition angle is ½ of the MBT, and FIG. 12 is a graph showing the manifold absolute pressure in accordance with each air-fuel ratio.

Referring to FIG. 12, in the case of a natural intake engine, which is operable until the manifold absolute pressure reaches 930 hPa, the state of the engine may be optimal when the air-fuel ratio is 1.3 under the condition that the manifold absolute pressure is 800 hPa, at which the engine can be smoothly driven.

In terms of the ignition angle and the output of the engine, when the air-fuel ratio is 1.3, the exhaust emissions margin and output margin are observed in FIGs. 11 and 12.

Each of the X-axes of the graphs in FIGs. 11 and 12 denotes 12 modes, which represent respectively different combinations of the RPM and the load applied to the engine.

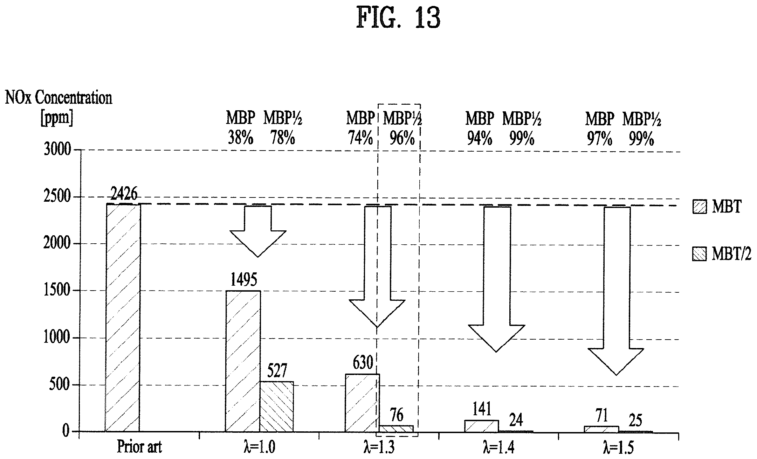

FIG. 13 is a graph showing the reduction of nitrogen oxide emissions according to the further embodiment of the present invention.

The graph in FIG. 13 shows the comparison results of nitrogen oxide emissions between the prior art and this embodiment under the condition in which the air-fuel ratio is in the range from 1.0 to 1.5 and the ignition angle corresponds to each of the MBT and ½ of the MBT.

The graph also shows the comparison results of the driving stability of the engine as well as the reduction of exhaust emissions.

Referring to FIG. 13, when the air-fuel ratio is in the range from 1.4 to 1.5 and the ignition angle is ½ of the MBT, the reduction reaches 99%. However, when the air-fuel ratio is 1.4 or higher, hunting of the engine RPM occurs frequently, and thus the driving state of the engine is not stable.

Therefore, under the condition that the range of hunting of the engine RPM is within 10 RPM and the concentration of nitrogen oxide is within 100 ppm, when the air-fuel ratio is 1.3 and the ignition angle is ½ of the MBT, the concentration of nitrogen oxide falls to 76 ppm. At this time, the concentration of nitrogen oxide is lower than that in the prior art by 96%. As such, according to the embodiment of the present invention, nitrogen oxide emissions may be reduced, and the engine may be efficiently driven.

According to the present invention, the engine is stably controlled from the region in which the air-fuel ratio is 1.0 to the region in which the air-fuel ratio is 1.3 and the ignition angle is ½ of the MBT.

The engine generation system is required to maximize the efficiency of the engine and the generator while minimizing the fuel consumption and exhaust emissions. By applying the present invention to the engine generation system, it is possible to improve the efficiency of the engine and the generator and to greatly reduce nitrogen oxide emissions through the control of entry into the lean air-fuel ratio driving.

Because a consumer does not always consume electric power or hot water (load) regularly but consumes the same variably, the engine needs to be stably driven with respect to variation in the load so that the cogeneration system can stably operate in accordance with respective circumstances. This requirement is effectively satisfied by applying the present invention to the cogeneration system.

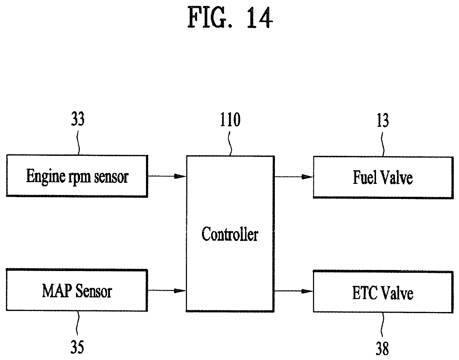

FIG. 14 is a block diagram schematically showing essential parts of the engine generation system to which the present invention is applicable.

Referring to FIGs. 1 and 14, the controller 110, which performs the above-described control process, controls the operation of the entire engine generation system, which includes the engine 30 and various sensors and valves.

The engine 30 may be provided with an engine RPM sensor 33 to measure the RPM of the engine 30.

The intake manifold 32 may be provided with a MAP sensor 35 for measuring an intake pressure, thereby calculating, in reverse, the magnitude of the load from the intake pressure of the fuel-air mixture that is introduced into the engine.

In general, the greater the introduced amount of fuel-air mixture, the larger the RPM of the engine and the larger the output, i.e. the larger the amount of power generation.

The fuel valve 13 may be provided at the inlet side of the mixer 16 in order to control the supplied amount of gas fuel that is to be mixed with air. The greater the supplied amount of gas fuel, the larger the fuel-to-air ratio of the fuel-air mixture.

The ETC valve 38 may be provided at the inlet side of the intake manifold 32 in order to control the amount of fuel-air mixture that is introduced into the engine. The greater the supplied amount of fuel-air mixture, the larger the output of the engine.

The controller 110 controls the operation of the engine 30 by controlling the opening degree of the fuel valve 13 and the opening degree of the ETC valve 38. The larger the opening degree of the fuel valve 13 and the opening degree of the ETC valve 38, the larger the RPM of the engine.

The controller 110 may be included in the power conversion system 90, or may be provided separately therefrom.

The controller 110 may control the engine under the theoretical air-fuel ratio driving condition, and may perform engine RPM tracking control so that the engine is driven at a target RPM when the external load connected to the generator 40 varies.

Subsequently, the controller 110 may determine whether the RPM of the engine has been stabilized, may change the air-fuel ratio to the lean air-fuel ratio, and may control the engine under the lean air-fuel ratio driving condition.

Subsequently, the controller 110 may determine whether the lean air-fuel ratio driving condition is changed. Upon determining that the lean air-fuel ratio driving condition has been changed, the controller 110 may change the air-fuel ratio to the theoretical air-fuel ratio and may control the engine under the theoretical air-fuel ratio driving condition.

## Claims

1. A method of controlling an engine of a generation system, the method comprising:
controlling an engine (S10) under a condition of theoretical air-fuel ratio driving;
performing engine revolution-per-minute, RPM, tracking control (S30) so that the engine is driven at a target engine RPM when an external load connected to a generator is changed;
determining (S40) whether an engine RPM has been stabilized by determining (S41) whether the engine RPM varies within an RPM range and determining (S42) whether the external load is additionally changed;
changing an air-fuel ratio to a lean air-fuel ratio (S50) upon determining that the engine RPM has been stabilized, and controlling the engine (S60) under a condition of lean air-fuel ratio driving; and
controlling a control cycle of an electronic throttle control, ETC, valve, such that the control cycle is lengthened or shortened depending on the range of variation in the RPM of the engine, when the engine enters the lean air-fuel ratio driving.

2. The method according to claim 1, wherein the controlling the engine (S60) under the condition of the lean air-fuel ratio driving is performed after a change of the external load is completed.

3. The method according to claim 1, or 2, wherein the determining (S40) whether the engine RPM has been stabilized comprises:
determining whether the range of variation in the RPM of the engine is within 20 RPM.

4. The method according to claim 1, 2, or 3, wherein the changing the air-fuel ratio (S50) comprises changing driving conditions, including the engine RPM, an opening degree of a fuel valve, and an ignition angle, in stages until a target RPM and a target amount of fuel in accordance with the lean air-fuel ratio driving are satisfied.

5. The method according to claim 4, wherein the driving conditions are changed toward target values in stages using a Manifold Absolute Pressure table, MAP table, in accordance with the lean air-fuel ratio driving and a MAP table in accordance with the theoretical air-fuel ratio driving.

6. The method according to claim 4, wherein a target value of the ignition angle is half a minimum spark advance for best torque, MBT.

7. The method according to any one of claims 1 to 6, further comprising:
determining (S70) whether the condition of the lean air-fuel ratio driving is changed; and
upon determining that the condition of the lean air-fuel ratio driving is changed, changing the air-fuel ratio (S80) to a theoretical air-fuel ratio, and controlling the engine (S90) under the condition of the theoretical air-fuel ratio driving.

8. The method according to claim 7, wherein the determining (S70) whether the condition of the lean air-fuel ratio driving is changed comprises:
determining (S71) whether the engine RPM is changed; and
determining (S72) whether the external load is additionally changed.

9. The method according to claim 7, or 8, wherein the condition of the lean air-fuel ratio driving is changed due to additional variation in the external load.

10. The method according to claim 9, wherein the changing the air-fuel ratio (S80) to the theoretical air-fuel ratio is performed before the additional change in the external load is completed.

11. The method according to claim 1 , wherein the control cycle of the ETC valve is lengthened as a current engine RPM approaches a target engine RPM.

12. An engine generation system comprising:
a generator (40);
an engine (30) connected to a driving shaft of the generator to drive the generator (40); and
a controller (110) for controlling the engine,
wherein the controller (110) is configured to control an engine under a condition of theoretical air-fuel ratio driving, to perform engine revolution-per-minute (RPM) tracking control so that the engine is driven at a target engine RPM when an external load connected to the generator is changed, to determine whether an engine RPM has been stabilized by determining whether the engine RPM varies within an RPM range and determining whether the external load is additionally changed, to change an air-fuel ratio to a lean air-fuel ratio, and to control the engine under a condition of lean air-fuel ratio driving, and
wherein the controller (110) is configured to control a control cycle of an ETC valve such that the control cycle is lengthened or shortened depending on the range of variation in the RPM of the engine, when the engine enters the lean air-fuel ratio driving.

13. The engine generation system according to claim 12, wherein the controller (110) determines whether the condition of the lean air-fuel ratio driving is changed, changes the air-fuel ratio to a theoretical air-fuel ratio upon determining that the condition of the lean air-fuel ratio driving is changed, and controls the engine under the condition of the theoretical air-fuel ratio driving.

14. The engine generation system according to claim 12, wherein, when the air-fuel ratio is changed, the controller (110) changes driving conditions, including the engine RPM, an opening degree of a fuel valve, and an ignition angle, in stages until a target RPM and a target amount of fuel in accordance with the lean air-fuel ratio driving are satisfied.

## Patentansprüche

1. Verfahren zum Steuern eines Motors eines Erzeugungssystems, wobei das Verfahren umfasst:
Steuern eines Motors (S 10) unter Vorgabe eines Betriebs mit theoretischem Luft-Kraftstoff-Verhältnis;
Durchführen einer Motordrehzahl-, U/min, Nachführsteuerung (S30), so dass der Motor mit einer Soll-Motordrehzahl angetrieben wird, wenn eine mit einem Generator verbundene externe Last geändert wird;
Bestimmen (S40), ob eine Motordrehzahl stabilisiert worden ist, durch Bestimmen (S41), ob die Motordrehzahl innerhalb eines Drehzahlbereichs variiert, und Bestimmen (S42), ob zusätzlich die externe Last geändert wird;
Ändern eines Luft-Kraftstoff-Verhältnisses in ein mageres Luft-Kraftstoff-Verhältnis (S50), wenn bestimmt wird, dass die Motordrehzahl stabilisiert worden ist, und Steuern des Motors (S60) unter Vorgabe eines Betriebs mit magerem Luft-Kraftstoff-Verhältnis; und
Steuern eines Steuerzyklus eines elektronischen Drosselklappensteuerventils, ETC, derart, dass der Steuerzyklus in Abhängigkeit von dem Variationsbereich der Motordrehzahl verlängert oder verkürzt wird, wenn der Motor in den Betrieb mit magerem Luft-Kraftstoff-Verhältnis eintritt.

2. Verfahren nach Anspruch 1, wobei die Steuerung des Motors (S60) unter Vorgabe des Betriebs mit magerem Luft-Kraftstoff-Verhältnis durchgeführt wird, nachdem eine Änderung der externen Last abgeschlossen ist.

3. Verfahren nach Anspruch 1 oder 2, wobei das Bestimmen (S40), ob die Motordrehzahl stabilisiert worden ist, umfasst:
Bestimmen, ob der Variationsbereich der Motordrehzahl innerhalb von 20 U/min liegt.

4. Verfahren nach Anspruch 1, 2 oder 3, wobei das Ändern des Luft-Kraftstoff-Verhältnisses (S50) das stufenweise Ändern der Betriebsvorgaben, einschließlich der Motordrehzahl, eines Öffnungsgrads eines Kraftstoffventils und eines Zündwinkels, umfasst, bis eine Soll-Drehzahl und eine Soll-Kraftstoffmenge gemäß dem Betrieb mit magerem Luft-Kraftstoff-Verhältnis erreicht sind.

5. Verfahren nach Anspruch 4, wobei die Betriebsvorgaben stufenweise in Richtung der Soll-Werte geändert werden, indem eine Tabelle für Absolutladedruck, MAP-Tabelle, gemäß dem Betrieb mit magerem Luft-Kraftstoff-Verhältnis und eine MAP-Tabelle gemäß dem Betrieb mit theoretischem Luft-Kraftstoff-Verhältnis Anwendung finden.

6. Verfahren nach Anspruch 4, wobei ein Soll-Wert des Zündwinkels die Hälfte einer minimalen Zündvorverstellung für bestes Drehmoment, MBT, ist.

7. Verfahren nach einem der Ansprüche 1 bis 6, ferner umfassend:
Bestimmen (S70), ob die Vorgabe des Betriebs mit magerem Luft- Kraftstoff-Verhältnis geändert wird; und
wenn bestimmt wird, dass die Vorgabe des Betriebs mit magerem Luft-Kraftstoff-Verhältnis geändert ist, Ändern des Luft-Kraftstoff-Verhältnisses (S80) in ein theoretisches Luft-Kraftstoff-Verhältnis und Steuern des Motors (S90) unter Vorgabe des Betriebs mit theoretischem Luft-Kraftstoff-Verhältnis.

8. Verfahren nach Anspruch 7, wobei das Bestimmen (S70), ob die Vorgabe des Betriebs mit magerem Luft-Kraftstoff-Verhältnis geändert wird, umfasst:
Bestimmen (S71), ob die Motordrehzahl geändert wird; und
Bestimmen (S72), ob zusätzlich die externe Last geändert wird.

9. Verfahren nach Anspruch 7 oder 8, wobei die Vorgabe des Betriebs mit magerem Luft-Kraftstoff-Verhältnis aufgrund einer zusätzlichen Änderung der externen Last geändert wird.

10. Verfahren nach Anspruch 9, wobei die Änderung des Luft-Kraftstoff-Verhältnisses (S80) auf das theoretische Luft-Kraftstoff-Verhältnis durchgeführt wird, bevor die zusätzliche Änderung der externen Last abgeschlossen ist.

11. Verfahren nach Anspruch 1, wobei ferner der Steuerzyklus des ETC-Ventils verlängert wird, wenn sich eine aktuelle Motordrehzahl einer Soll-Motordrehzahl nähert.

12. Motor-Erzeugungssystem, aufweisend:
einen Generator (40);
einen Motor (30), der mit einer Antriebswelle des Generators verbunden ist, um den Generator (40) anzutreiben; und
eine Steuerung (110) zum Steuern des Motors,
wobei die Steuerung (110) eingerichtet ist, einen Motor unter Vorgabe eines Betriebs mit theoretischem Luft-Kraftstoff-Verhältnis zu steuern, um eine Motordrehzahl-Nachführsteuerung durchzuführen, so dass der Motor mit einer Soll-Motordrehzahl angetrieben wird, wenn eine mit dem Generator verbundene externe Last geändert wird, um zu bestimmen, ob eine Motordrehzahl stabilisiert worden ist, indem bestimmt wird, ob die Motordrehzahl innerhalb eines Drehzahlbereichs variiert, und indem bestimmt wird, ob zusätzlich die externe Last geändert wird, um ein Luft-Kraftstoff-Verhältnis in ein mageres Luft-Kraftstoff-Verhältnis zu ändern, und um den Motor unter Vorgabe eines Betriebs mit magerem Luft-Kraftstoff-Verhältnis zu steuern, und
wobei die Steuerung (110) eingerichtet ist, einen Steuerzyklus eines ETC-Ventils so zu steuern, dass der Steuerzyklus in Abhängigkeit von dem Variationsbereich der Motordrehzahl verlängert oder verkürzt wird, wenn der Motor in den Betrieb mit magerem Luft-Kraftstoff-Verhältnis eintritt.

13. Motor-Erzeugungssystem nach Anspruch 12, wobei die Steuerung (110) bestimmt, ob die Vorgabe des Betriebs mit magerem Luft-Kraftstoff-Verhältnis geändert wird, das Luft-Kraftstoff-Verhältnis in ein theoretisches Luft-Kraftstoff-Verhältnis ändert, wenn bestimmt wird, dass die Vorgabe des Betriebs mit magerem Luft-Kraftstoff-Verhältnis geändert wird, und den Motor unter Vorgabe des Betriebs mit theoretischem Luft-Kraftstoff-Verhältnis steuert.

14. Motor-Erzeugungssystem nach Anspruch 12, wobei dann, wenn das Luft-Kraftstoff-Verhältnis geändert wird, die Steuerung (110) die Betriebsvorgaben, einschließlich der Motordrehzahl, eines Öffnungsgrads eines Kraftstoffventils und eines Zündwinkels, stufenweise ändert, bis eine Soll-Drehzahl und eine Soll-Kraftstoffmenge gemäß dem Betrieb mit magerem Luft-Kraftstoff-Verhältnis erreicht sind.

## Revendications

1. Procédé de commande d'un moteur d'un système de génération, le procédé comprenant :
la commande d'un moteur (S10) sous une condition d'un entraînement à rapport air-carburant théorique ;
la réalisation d'une commande de suivi de régime moteur (S30) de telle sorte que le moteur est entraîné à un régime moteur cible lorsqu'une charge externe reliée à un générateur est modifiée ;
la détermination (S40) pour savoir si un régime moteur a été stabilisé ou non en déterminant (S41) si le régime moteur varie dans une plage de régime ou non et en déterminant (S42) si la charge externe est modifiée en supplément ou non ;
la modification d'un rapport air-carburant en un rapport air-carburant pauvre (S50) lorsqu'il est déterminé que le régime moteur a été stabilisé, et la commande du moteur (S60) sous une condition d'entraînement à rapport air-carburant pauvre ; et
la commande d'un cycle de commande d'une soupape de commande électronique du papillon des gaz de telle sorte que le cycle de commande est allongé ou raccourci selon l'amplitude de variation du régime du moteur lorsque le moteur passe à l'entraînement à rapport air-carburant pauvre.

2. Procédé selon la revendication 1, dans lequel la commande du moteur (S60) sous la condition de l'entraînement à rapport air-carburant pauvre est effectuée après l'achèvement d'une modification de la charge externe.

3. Procédé selon la revendication 1 ou 2, dans lequel la détermination (S40) pour savoir si le régime moteur a été stabilisé ou non comprend :
la détermination pour savoir si l'amplitude de variation du régime du moteur est de l'ordre de 20 ou non.

4. Procédé selon la revendication 1, 2 ou 3, dans lequel la modification du rapport air-carburant (S50) comprend la modification de conditions d'entraînement, y compris le régime moteur, un degré d'ouverture d'une soupape de carburant, et un angle d'allumage, par étapes jusqu'à ce qu'un régime cible et une quantité cible de carburant soient remplis conformément à l'entraînement à rapport air-carburant pauvre.

5. Procédé selon la revendication 4, dans lequel les conditions d'entraînement sont modifiées vers des valeurs cibles par étapes en utilisant un tableau MAP [Manifold Absolute Pressure - pression absolue de la tubulure d'admission] conformément à l'entraînement à rapport air-carburant pauvre et un tableau MAP conformément à l'entraînement à rapport air-carburant théorique.

6. Procédé selon la revendication 4, dans lequel une valeur cible de l'angle d'allumage est la moitié d'une avance à l'allumage minimale pour le meilleur couple.

7. Procédé selon l'une quelconque des revendications 1 à 6, comprenant en outre :
la détermination (S70) pour savoir si la condition de l'entraînement à rapport air-carburant pauvre est modifiée ou non ; et
lorsqu'il est déterminé que la condition de l'entraînement à rapport air-carburant pauvre a été modifiée, la modification du rapport air-carburant (S80) en un rapport air-carburant théorique, et la commande du moteur (S90) sous la condition de l'entraînement à rapport air-carburant théorique.

8. Procédé selon la revendication 7, dans lequel la détermination (S70) pour savoir si la condition de l'entraînement à rapport air-carburant pauvre a été modifiée ou non comprend :
la détermination (S71) pour savoir si le régime moteur a été modifié ou non ; et
la détermination (S72) pour savoir si la charge externe a été modifiée en supplément ou non.

9. Procédé selon la revendication 7 ou 8, dans lequel la condition de l'entraînement à rapport air-carburant pauvre est modifiée en raison de la variation supplémentaire de la charge externe.

10. Procédé selon la revendication 9, dans lequel la modification du rapport air-carburant (S80) en le rapport air-carburant théorique est réalisée avant que la modification supplémentaire de la charge externe ne soit achevée.

11. Procédé selon la revendication 1, dans lequel le cycle de commande de la soupape de commande électronique de papillon des gaz est allongé à mesure qu'un régime moteur actuel se rapproche d'un régime moteur cible.

12. Système de génération de moteur comprenant :
un générateur (40) ;
un moteur (30) relié à un arbre d'entraînement du générateur pour entraîner le générateur (40) ; et
un dispositif de commande (110) pour commander le moteur,
dans lequel le dispositif de commande (110) est configuré pour commander un moteur sous une condition d'un entraînement à rapport air-carburant théorique pour réaliser une commande de suivi de régime moteur de telle sorte que le moteur est entraîné à un régime moteur cible lorsqu'une charge externe reliée au générateur est modifiée, pour déterminer si un régime moteur a été stabilisé ou non en déterminant si le régime moteur varie dans une plage de régime ou non et en déterminant si la charge externe est modifiée en supplément ou non, pour modifier un rapport air-carburant en un rapport air-carburant pauvre, et pour commander le moteur sous une condition de l'entraînement à rapport air-carburant pauvre, et
dans lequel le dispositif de commande (110) est configuré pour commander un cycle de commande d'une soupape de commande électronique du papillon des gaz de telle sorte que le cycle de commande est allongé ou raccourci selon l'amplitude de variation dans le régime du moteur lorsque le moteur passe à l'entraînement à rapport air-carburant pauvre.

13. Système de génération de moteur selon la revendication 12, dans lequel le dispositif de commande (110) détermine si la condition de l'entraînement à rapport air-carburant pauvre a été modifiée ou non, modifie le rapport air-carburant en un rapport air-carburant théorique lorsqu'il est déterminé que la condition de l'entraînement à rapport air-carburant pauvre a été modifiée, et commande le moteur sous la condition de l'entraînement à rapport air-carburant théorique.

14. Système de génération de moteur selon la revendication 12, dans lequel, lorsque le rapport air-carburant est modifié, le dispositif de commande (110) modifie des conditions d'entraînement, y compris le régime moteur, un degré d'ouverture d'une soupape de carburant, et un angle d'allumage, par étapes jusqu'à ce qu'un régime cible et une quantité de carburant cible conformément à l'entraînement à rapport air-carburant pauvre soient remplis.
